Europäisches Patentamt

European Patent Office

Office européen des brevets

(11) Veröffentlichungsnummer: **0 223 100 B1**

# (12) EUROPÄISCHE PATENTSCHRIFT

(45) Veröffentlichungstag der Patentschrift: **02.01.92**

(21) Anmeldenummer: **86114759.3**

(22) Anmeldetag: **23.10.86**

(51) Int. Cl.⁵: **H02P 5/172**, H02P 7/00

(54) **Steuervorrichtung für einen Druckmaschinenantriebsmotor.**

(30) Priorität: **22.11.85 DE 3541277**

(43) Veröffentlichungstag der Anmeldung:
**27.05.87 Patentblatt 87/22**

(45) Bekanntmachung des Hinweises auf die
Patenterteilung:
**02.01.92 Patentblatt 92/01**

(84) Benannte Vertragsstaaten:
**BE CH DE FR GB IT LI NL SE**

(56) Entgegenhaltungen:
**GB-A- 2 074 404**
**US-A- 4 378 517**
**US-A- 4 484 117**

(73) Patentinhaber: **Heidelberger Druckmaschinen
Aktiengesellschaft
Kurfürsten-Anlage 52-60 Postfach 10 29 40
W-6900 Heidelberg 1(DE)**

(72) Erfinder: **Rodi, Anton
Karlsruher Strasse 12
W-6906 Leimen 3(DE)**

(74) Vertreter: **Stoltenberg, Baldo Heinz-Herbert
c/o Heidelberger Druckmaschinen AG
Kurfürsten-Anlage 52-60
W-6900 Heidelberg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft eine Steuervorrichtung für einen elektrischen Druckmaschinenantriebsmotor, die in Abhängigkeit von mindestens einer ihr zugeführten Sollgröße mindestens ein Leistungsstellglied, das mit einem elektrischen Netz und dem Motor zu verbinden ist, steuert, bestehend aus einer Recheneinrichtung und einem Speicher.

Eine derartige Steuervorrichtung ist in der GB 20 74 404 A wiedergegeben. Dieses Dokument betrifft eine Gleichstrommotorensteuerung, wobei der Ankerstrom bzw. der Feldstrom mittels der Drehzahl gesteuert wird. Ebenso ist eine Recheneinrichtung vorgesehen, die gespeicherte Daten zur Steuerung des Motors verwendet.

Die US-PS 4,378,517 betrifft eine Steuervorrichtung für einen Elektromotor. Der Gleichstrommotor wird mittels einer Batterie versorgt mit dem Ziel, den Motor bezüglich des Feld-und Ankerstroms mit geringstem Verlust zu betreiben.

In der EP 0 113 848 A3 ist eine Datenein- und -ausgabeeinrichtung beschrieben, mit der die Stellglieder einer Antriebsregelungseinrichtung unter Vermeidung von Digital-Analog-Wandlern digital angesteuert und der Digitalrechner von der Ermittlung der Zündzeitpunkte von Thyristoren der Stellglieder entlastet werden.

Die zum Antrieb von Druckmaschinen, insbesondere auch für größere Offset-Druckmaschinen verwendeten Motoren sind häufig fremderregte Gleichstrommotoren, die über gesteuerte Gleichrichter aus dem Drehstromnetz oder allgemeiner einem Wechselstromnetz gespeist werden. Wenn aus Gründen einfacher Fertigung und Lagerhaltung für Motoren unterschiedlicher Baugrößen entsprechend unterschiedlich großen anzutreibenden Maschinen stets die gleiche Steuervorrichtung verwendet werden soll, so ist eine Anpassung der Steuervorrichtung an den jeweiligen Motor nötig. Durch die genannte Steuerung erfolgt insgesamt eine Regelung der Drehzahl des Motors auf die als Sollwert vorgegebene Drehzahl. Die bekannten Steuer- und Regelvorrichtungen haben den Nachteil, daß sie in einem aufwendigen Arbeitsvorgang auf den jeweiligen Motor abgeglichen werden müssen. Dadurch werden für die Inbetriebnahme qualifizierte Fachleute benötigt. Wollte man dadurch Abhilfe schaffen, daß speziell voreingestellte Steuervorrichtungen eingesetzt werden, so ergäben sich hierdurch viele Varianten, was zu einer erhöhten Lagerhaltung und dadurch zu steigenden Kosten führen würde.

Der Erfindung liegt somit die Aufgabe zugrunde, eine Steuervorrichtung zu schaffen, die eine einfache Anpassung an unterschiedliche Motoren oder unterschiedliche Leistungsstellglieder ermöglicht.

Diese Aufgabe wird gemäß der Erfindung dadurch gelöst, daß der Speicher Parameter mehrerer unterschiedlicher Motoren enthält und daß eine Vorrichtung zum Erkennen des angeschlossenen Motors vorgesehen ist, die die Zuführung der dem angeschlossenen Motor entsprechenden Parameter aus dem Speicher zur Recheneinrichtung veranlaßt, bzw. daß der Speicher Parameter mehrerer unterschiedlicher Leistungsstellglieder enthält und daß eine Vorrichtung zum Erkennen des an die Steuervorrichtung angeschlossenen Leistungsstellgliedes vorgesehen ist, die die Zuführung der dem angeschlossenen Leistungsstellglied entsprechenden Parameter aus dem Speicher zur Recheneinrichtung veranlaßt.

Die genannten Daten sind in dem Speicher enthalten und/oder werden ermittelt und anschließend in der Steuervorrichtung wirksam gemacht, z. B. einem Rechenwerk einer Stromrichter-Recheneinrichtung und/oder einer anderen Recheneinrichtung zugeführt. Die Daten, die ermittelt werden, können beispielsweise aus im Speicher enthaltenen Daten berechnet werden. Es ist aber auch möglich, derartige Daten durch Messung zu gewinnen, beispielsweise durch eine Temperaturmessung, um es zu ermöglichen, die Betriebsweise des Antriebsmotors an die Umgebungstemperatur anzupassen, beispielsweise bei relativ niedriger Umgebungstemperatur den Anfahrvorgang langsam auszuführen. Bei den genannten Daten kann es sich zumindest teilweise auch um Parameterwerte, z. B. des Antriebsmotors, handeln. Bei dem Speicher handelt es sich um einen Digitalspeicher, vorzugsweise um ein ROM, wie es in der Technik elektronischer Rechenanlagen allgemein bekannt ist.

Die Erfindung ermöglicht es, daß die Steuervorrichtung in der gewünschten Weise arbeitet, ohne daß es erforderlich ist, wie beim Stand der Technik, Potentiometer von Hand einzustellen. Es ist zweckmäßig und vorteilhaft, wenn die Steuervorrichtung einen Digitalrechner enthält, wie dies an sich bei Steuervorrichtungen der hier genannten Art bekannt ist.

Der Vorteil der Erfindung liegt darin, daß ein und dieselbe Steuervorrichtung für eine Vielzahl von Motoren geeignet ist, da durch die übertragung der Daten in die Steuervorrichtung diese z. B. an den jeweiligen Motor angepaßt werden kann. Es muß lediglich dafür gesorgt werden, daß die erforderlichen Daten z. B. in dem Speicher zur Verfügung stehen, von dem aus sie in die Steuervorrichtung übertragen werden können. Dabei sind keine aufwendigen, manuellen Abgleichvorgänge für die Inbetriebsetzung notwendig.

Der Speicher kann sich am Motor und/oder an einer vom Motor anzutreibenden Maschine, also insbesondere einer Druckmaschine, befinden. Um

eine Übertragung der im Speicher enthaltenen Daten in die Steuervorrichtung zu ermöglichen, muß im einfachsten Fall ein Kabel, das mit dem Speicher in Verbindung steht und das zusätzlich zur Überwachung des Motors, beispielsweise dessen Drehzahl, benötigte Meßleitungen enthält, zur Steuervorrichtung verlegt werden und wird dort an einen geeigneten Anschluß, beispielsweise Steckanschluß, angeschlossen. Hier enthält jede Maschine in Form des an der Maschine, beispielsweise in einem robusten kleinen Gehäuse montierten Speichers, die für den Betrieb der Steuervorrichtung erforderlichen Parameter und/oder Daten. Wird der Motor oder die gesamte Druckmaschine einschließlich Motor gegen ein anderes Modell ausgetauscht, so sind bei einem derartigen Austausch Änderungen an der Steuervorrichtung nicht erforderlich.

Der Speicher kann sich in unmittelbarer Nähe der Steuervorrichtung befinden. Dies kann im Hinblick auf eine besonders störsichere Datenübertragung nützlich sein. Außerdem sind in diesem Falle die funktionell zusammengehörenden elektronischen Baueinheiten nicht allzuweit voneinander getrennt, wodurch die Überprüfung der Anlage im Einzelfall erleichtert sein kann.

Man kann so verfahren, daß je nach der anzuschließenden Maschine ein besonderer Speicher z. B. in die Steuervorrichtung eingesetzt wird. Bei einer anderen Ausführungsform der Erfindung ist jedoch vorgesehen, daß der Speicherparameter mehrere unterschiedliche Motoren enthält, und daß eine Vorrichtung zum Erkennen des an die Steuervorrichtung angeschlossenen Motors vorgesehen ist, die die Zuführung der dem angeschlossenen Motor entsprechenden Parameter zur Steuervorrichtung veranlaßt. Die genannten Parameter der Motoren sind beispielsweise die Nenn-Drehzahl, die Nenn-Ankerspannung und der Nenn-Erregerstrom bei einer bestimmten Belastung.

Wenn hier die Parameter sämtlicher an die Steuervorrichtung anschließbarer Motoren im Speicher enthalten sind, so kann die Steuervorrichtung mit all diesen Motoren zusammengeschaltet werden.

Der Speicher kann gemäß einer Ausführungsform der Erfindung, vorteilhafterweise zusätzlich zu den Daten oder Parametern für die verschiedenen Motoren, Parameter mehrerer unterschiedlicher Leistungsstellglieder enthalten, und es ist eine Vorrichtung zum Erkennen des an die Steuervorrichtung angeschlossenen Leistungsstellgliedes vorgesehen, die die Zuführung der dem angeschlossenen Leistungstellglied entsprechenden Parameter zur Steuervorrichtung veranlaßt. Eine derartige Ausführungsform der Erfindung ermöglicht es beispielsweise, beim nie völlig auszuschließenden Ausfall eines für eine bestimmte Maschine vorgesehenen Leistungsstellgliedes, das für eine andere Maschine im gleichen Betrieb vorhandene Leistungsstellglied anstatt des defekten Leistungsstellgliedes einzusetzen. Ist das als Ersatz verwendete Leistungsstellglied für einen kleineren Motor vorgesehen und daher schwächer dimensioniert, so verhindert die geschilderte Ausführungsform der Erfindung, daß dieses als Ersatz vorgesehene Leistungsstellglied elektrisch überlastet wird. Der Betrieb des Motors ist dann zwar möglich, jedoch nicht mit dessen voller Leistung.

Die eingangs genannten ermittelten Daten, die der Steuervorrichtung zugeführt werden, können durchaus auch aufgrund von Daten der Steuervorrichtung ermittelt worden sein. Es kann sich hier beispielsweise um Daten hinsichtlich der Temperatur der in der Steuervorrichtung enthaltenen Halbleiterelemente, den zeitlichen Verlauf des Drehmoments, die Temperatur des Motors handeln. Es kann sich hierbei jedoch auch um in der Steuervorrichtung oder in den mit dieser verbundenen Leistungsstellgliedern in irgendeiner Form gespeicherte Daten handeln, die in der soeben geschilderten Weise dazu verwendet werden, eine Überlastung der Leistungsstellglieder zu verhindern.

Das Erkennen des jeweils angeschlossenen Motors oder der Maschine bzw. des Leistungsstellgliedes kann im einfachsten Fall dadurch technisch verwirklicht sein, daß die Angaben über den Motor (z. B. die Typbezeichnung) oder das Leistungsstellglied über eine von Hand zu betätigende Eingabevorrichtung eingebbar sind, beispielsweise mittels Drehschaltern oder Kippschaltern. Bei einer anderen Ausführungsform der Erfindung, bei der auch dieser einfache Einstellvorgang nicht erforderlich ist, ist vorgesehen, daß die Erkennung des angeschlossenen Motors über codierte Stecker erfolgt, die mit zum Motor bzw. zur Maschine führenden Meß- und/oder Kontrolleitungen verbunden sind. Auf diese Weise wird bei der Herstellung einer elektrischen Verbindung, die ohnehin erforderlich ist, gleichzeitig der Steuervorrichtung mitgeteilt, welche Art von Motor angeschlossen ist. Der Codierstecker kann beispielsweise Codierstifte aufweisen, deren Vorhandensein oder Nichtvorhandensein durch Endschalter abgetastet wird. Die Anordnung kann auch so getroffen sein, daß je nach Art des verwendeten Codiersteckers dieser nur in eine einzige von mehreren Buchsen paßt, und daß auf diese Weise der Steuervorrichtung die Art der angeschlossenen Maschine mitgeteilt wird. In ähnlicher Weise kann bei Ausführungsformen der Erfindung das angeschlossene Leistungsstellglied erkannt werden.

Schließlich ist bei einer wiederum anderen Ausführungsform vorgesehen, daß zum Erkennen des an die Steuervorrichtung angeschlossenen Motors eine Meßvorrichtung zum Erfassen mindestens eines charakteristischen Meßwerts, z. B. des Ankerwicklungswiderstands des Motors, vorgesehen ist. Wenn die zum Anschluß an die Steuervorrichtung in Frage kommenden Motoren oder Leistungsstellglieder sich hinsichtlich des genannten Meßwerts ausreichend deutlich unterscheiden, so kann auch auf diese Weise eine automatische Feststellung des angeschlossenen Motors oder der sonstigen Einheit erfolgen.

Bei einer Ausführungsform der Erfindung ist zum Erkennen des an die Steuervorrichtung angeschlossenen Motors oder des Leistungsstellglieds eine über eine Leitung abfragbare Codierung, z. B. Kurzschlußverbindung vorgesehen.

Wenn die gleiche Baugröße eines Motors zum Antrieb unterschiedlicher Maschinen verwendet wird, so kann es erforderlich sein, je nach Anwendungsfall den Motor in unterschiedlicher Weise zu betreiben, beispielsweise mit einer unterschiedlichen Drehzahl. Auch diese Angaben über die Maschine können der Steuervorrichtung auf eine der oben geschilderten Arten mitgeteilt werden. Unterschiedliche Motoren lassen sich möglicherweise durch eine reine Messung von am Motor zugänglichen Größen dadurch feststellen, daß das Drehmoment, das proportional der Ankerstromaufnahme ist, festgestellt wird.

Bisher wurde davon ausgegangen, daß die im Speicher gespeicherten Daten unverändert der Steuervorrichtung mitgeteilt werden. Bei einer Ausführungsform der Erfindung ist jedoch eine überwachungsvorrichtung vorgesehen, die beim Auftreten eines bestimmten Betriebsverhaltens des Antriebs (z. B. Schwergängigkeit, Regelschwingungen) der Steuervorrichtung für mindestens einen der Parameter einen modifizierten Wert der Steuervorrichtung zuführt. Dies kann beispielsweise so erfolgen, daß dann, wenn sich das vom Motor bei Einhaltung einer vorgegebenen Drehzahl aufzubringende Drehmoment einem oberen Grenzwert nähert, weil beispielsweise die Druckmaschine wegen niedriger Umgebungstemperaturen schwergängig ist, die Drehzahl verringert wird. Auch kann es vorteilhaft sein, die Netzspannung zu überwachen und insbesondere beim Absinken der Netzspannung unter einen vorgegebenen Wert die Steuerung des Motors entsprechend anzupassen.

Elektromotoren haben herstellungsbedingte Toleranzen, die dazu führen, daß beim Anlegen von zwei Nenngrößen, beispielsweise der Nenn-Ankerspannung und des Nenn-Erregerstroms, bei einer vorbestimmten Belastung die gewünschte Nenn-Drehzahl unterschritten oder überschritten wird. Um in einem derartigen Fall die Nenn-Drehzahl möglichst genau zu erreichen, und dies ohne aufwendige Justiermaßnahmen an der Steuervorrichtung, ist gemäß einer Ausführungsform der Erfindung, die zum Steuern eines fremderregten Gleichstrommotors dient, wie er häufig bei Druckmaschinen verwendet wird, vorgesehen, daß sie eine Vorrichtung aufweist, um aus den Daten und/oder Parametern und ggf. beim Betrieb des Motors in der Steuervorrichtung ermittelten Meßwerten den Erregerstrom auf einen derartigen Wert einzustellen, daß ein vorgegebenes Betriebsverhalten, z. B. ein vorgegebener Zusammenhang, zwischen der Drehzahl und der Ankerspannung vorhanden ist, und auf diesem Wert konstant zu halten. Dies kann z. B. in der Weise erfolgen, daß die Nenn-Ankerspannung und der Nenn-Erregerstrom bei Nennbelastung eingestellt werden, und daß bei Abweichung der Drehzahl von der Nenn-Drehzahl der Erregerstrom so verändert wird, bis die Nenn-Drehzahl erreicht wird. Der hierdurch gefundene Wert des Erregerstroms wird abgespeichert, vorzugsweise nach einer Analog-Digital-Umsetzung in einem Speicher einer Rechenvorrichtung. Wird dieser Erregerstrom konstant gehalten, so werden hierdurch Drehzahlabweichungen infolge von Temperaturschwankungen der Erregerwicklung vermieden.

Es besteht jedoch auch die Möglichkeit, die Abweichungen der Maschinenparameter von den Nennwerten herstellerseitig in einem Probelauf festzustellen und in einem Speicher, der dem Motor räumlich zugeordnet ist, insbesondere mit dem Motor fest verbunden ist, abzuspeichern. Wenn dann dieser Motor installiert wird, und ohnehin eine Meßleitung zur Steuervorrichtung verlegt werden muß, wobei diese Meßleitung beispielsweise die von einem Tachogenerator gelieferten Impulse überträgt, so können im gleichen Kabel angeordnete Leitungen dazu dienen, die im Speicher enthaltene Information über die Toleranzen des Motors der Steuervorrichtung zuzuführen und diese Daten zur automatischen Einstellung der Steuervorrichtung zu verwenden.

Bei einer Ausführungsform der Erfindung ist vorgesehen, daß, ähnlich wie oben für die Parameter des Motors vorgesehen wurde, auch Parameter des verwendeten Stromrichters der Steuervorrichtung zugeführt werden, sofern unterschiedliche Stromrichter verwendet werden können. In einem derartigen Fall wird die Steuervorrichtung ohne Einstellmaßnahmen automatisch an den jeweiligen Stromrichter angepaßt.

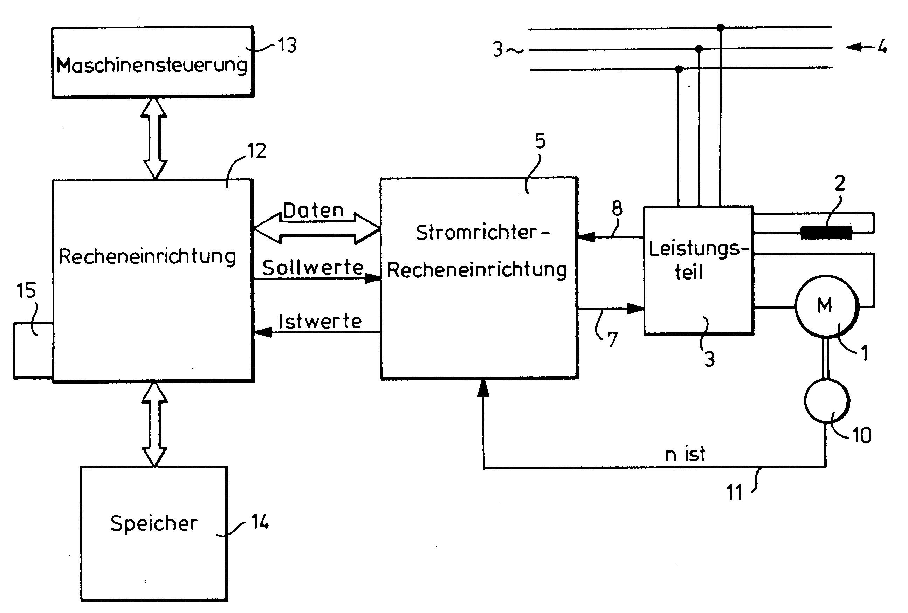

Weitere Merkmale und Vorteile der Erfindung ergeben sich aus der nachfolgenden Beschreibung eines Ausführungsbeispiels der Erfindung anhand der Zeichnung, die erfindungswesentliche Einzelheiten zeigt, und aus den Ansprüchen.

Die einzige Figur zeigt schematisch ein Ausführungsbeispiel einer Steuervorrichtung für eine Bogen-Offsetdruckmaschine.

Ein als fremderregter Gleichstrommotor ausgebildeter Motor 1 treibt eine Sechsfarben-Bogen-Offsetmaschine an. Der Ankerstrom für den Motor 1 und der einer Feldwicklung 2 des Motors 1 zugeführte Erregerstrom werden von einem Leistungsstellglied 3, im weiteren einfach als Leistungsteil bezeichnet, geliefert, das gesteuerte Gleichrichter (Thyristoren) enthält, durch die die von einem Drehstromnetz 4 gelieferte elektrische Energie in Gleichstrom ungewandelt wird. Die Zündimpulse für das Leistungsstellglied 3 werden von einer Stromrichter-Recheneinrichtung 5 erzeugt und dem Leistungsstellglied 3 über Leitungen 7 zugeführt. Im Leistungsstellglied 3 sind Strommeßeinrichtungen und Spannungsmeßeinrichtungen enthalten, deren Meßwerte über Leitungen 8 der Stromrichter-Recheneinrichtung 5 zugeführt werden. Ein mit der Welle des Motors 1 verbundener Tachogenerator 10 liefert ein für die Drehzahl des Motors charakteristisches Signal über eine Leitung 11 an die Stromrichter-Recheneinrichtung 5.

Eine mit der Stromrichter-Recheneinrichtung 5 gekoppelte Recheneinrichtung 12 steht mit einer Maschinensteuerung 13 und mit einem Speicher 14 in Verbindung. Die Maschinensteuerung 13 wird von dem für die Druckmaschine verantwortlichen Drucker betätigt, wobei er beispielsweise das Einschalten und Ausschalten der Druckmaschine und die Drehzahleinstellung an der Maschinensteuerung vornimmt. An der Maschinensteuerung werden auch weitere Einstellvorgänge und Regelvorgänge veranlaßt, die nicht mit dem Antrieb des Motors 1 in unmittelbarem Zusammenhang stehen, beispielsweise die Registerverstellung der Druckmaschine.

Mit der Recheneinrichtung 12 ist eine Eingabevorrichtung 15 verbunden, an der bei der Installation der Anlage mittels Schaltern eine Typenangabe für den Motor 1 und für die vom Motor angetriebene Druckmaschine eingegeben worden sind. Im Speicher 14 sind Parameter für alle zum Antrieb von Druckmaschinen verwendeten Motoren des Herstellers der in der Figur gezeigten Anlage abgespeichert.

Anhand der am Eingabefeld 15 vorgenommenen Einstellungen ist die Recheneinrichtung 12 in der Lage, aus dem Speicher 14 diejenigen Parameter auszulesen, die für den speziellen angeschlossenen Motor 1 charakteristisch sind. Diese Parameter umfassen insbesondere den maximal zulässigen Ankerstrom, die maximal zulässige Ankerspannung, den Erregerstrom für die Feldwicklung 2, den zulässigen Drehzahlbereich des Motors 1 und gegebenenfalls andere Werte. Beim Motor 1 gemäß Ausführungsbeispiel soll es sich um einen Motor handeln, der hinsichtlich maximalem Ankerstrom und maximaler Drehzahl unter den Werten eines anderen, vom gleichen Hersteller gelieferten Motors liegt, dessen Parameter ebenfalls im Speicher 14 abgespeichert sind. Das Leistungsstellglied 3 wäre in der Lage, auch jenen anderen Motor zu versorgen. Die Recheneinrichtung 12 sorgt dafür, daß als der Stromrichter-Recheneinrichtung 5 zuzuführende Sollwerte höchstens die für den angeschlossenen Motor 1 zulässigen Werte verwendet werden, selbst wenn aus irgendwelchen Gründen an der Maschinensteuerung 13 ein höherer Wert, beispielsweise für die Drehzahl, eingestellt worden sein sollte.

Wenn von der im Beispiel vorgesehenen Sechsfarben-Druckmaschine beispielsweise nur zwei Farbwerke in Betrieb sind, so ändert sich das von der Druckmaschine benötigte maximale Drehmoment, und diese Tatsache wird durch die Maschinensteuerung 13 der Recheneinrichtung 12 ebenfalls mitgeteilt. Wenn daher, wie soeben erwähnt, nur zwei Druckwerke in Betrieb sind, so wird durch die Recheneinrichtung 12 dafür gesorgt, daß der Stromrichter-Recheneinrichtung 5 als maximal möglicher Soll-Wert für den Ankerstrom ein neidrigerer Wert zugeführt wird, als wenn alle sechs Druckwerke in Betrieb sind.

Die im Ausführungsbeispiel vorgesehene Aufteilung der Aufgaben zwischen der Stromrichter-Recheneinrichtung 5 und der Recheneinrichtung 12 kann auch anders gewählt werden oder es können auch beide genannten Recheneinrichtungen zu einer einzigen zusammengefaßt werden.

Die Erfindung ist verwendbar für den Motor oder die Motoren für den Hauptantrieb einer Druckmaschine, aber auch für andere Motoren einer Druckmaschine, z. B. im Feuchtwerk.

**Patentansprüche**

1. Steuervorrichtung für einen elektrischen Druckmaschinenantriebsmotor (1), die in Abhängigkeit von mindestens einer ihr zugeführten Sollgröße mindestens ein Leistungsstellglied (3), das mit einem elektrischen Netz (4) und dem Motor (1) zu verbinden ist, steuert, bestehend aus einer Recheneinrichtung (12) und einem Speicher (14),
   **dadurch gekennzeichnet,**
   daß der Speicher (14) Parameter mehrerer unterschiedlicher Motoren enthält, und daß eine Vorrichtung zum Erkennen des angeschlossenen Motors (1) vorgesehen ist, die die Zuführung der dem angeschlossenen Motor entsprechenden Parameter aus dem Speicher (14) zur Recheneinrichtung (12) veranlaßt.

2. Steuervorrichtung für einen elektrischen Druckmaschinenantriebsmotor (1), die in Abhängigkeit von mindestens einer ihr zugeführten Sollgröße mindestens ein Leistungsstellglied (3), das mit einem elektrischen Netz (4) und dem Motor (1) zu verbinden ist, steuert, bestehend aus einer Recheneinrichtung (12) und einem Speicher (14), insbesondere nach Anspruch 1,

**dadurch gekennzeichnet,**
daß der Speicher (14) Parameter mehrerer unterschiedlicher Leistungsstellglieder enthält, und daß eine Vorrichtung zum Erkennen des an die Steuervorrichtung angeschlossenen Leistungsstellgliedes (3) vorgesehen ist, die die Zuführung der dem angeschlossenen Leistungsstellglied (3) entsprechenden Parameter aus dem Speicher (14) zur Recheneinrichtung (12) veranlaßt.

3. Steuervorrichtung nach Anspruch 1 oder 2,
**dadurch gekennzeichnet,**
daß der Recheneinrichtung (12) eine von Hand betätigbare Eingabevorrichtung (15) zur Eingabe von Angaben über den Motor (1) oder über das Leistungsstellglied (3) zugeordnet ist.

4. Steuervorrichtung nach Anspruch 1,
**dadurch gekennzeichnet,**
daß die Erkennung des angeschlossenen Motors (1) über Codierstecker erfolgt, die vorzugsweise mit zum Motor (1) führenden Meß- und/oder Kontrolleitungen verbunden sind.

5. Steuervorrichtung nach Anspruch 2,
**dadurch gekennzeichnet,**
daß die Erkennung des angeschlossenen Leistungsstellgliedes (3) über Codierstecker erfolgt.

6. Steuervorrichtung nach Anspruch 1 oder 2,
**dadurch gekennzeichnet,**
daß zum Erkennen des angeschlossenen Motors (1) bzw. des Leistungsstellgliedes (3) eine Meßvorrichtung zum Erfassen mindestens eines charakteristischen Meßwerts vorgesehen ist.

7. Steuervorrichtung nach Anspruch 1 oder 2,
**dadurch gekennzeichnet,**
daß zum Erkennen des angeschlossenen Motors(1) bzw. des Leistungsstellgliedes (3) eine über eine Leitung abfragbare Codierung vorgesehen ist.

8. Steuervorrichtung nach einem der vorhergehenden Ansprüche,
**dadurch gekennzeichnet,**
daß der Speicher (14) Parameter eines zur Energieversorgung des Motors (1) verwendeten Stromrichters zur Auswertung durch die Recheneinrichtung (12) enthält.

## Claims

1. Control mechanism for an electric drive motor (1) of a printing machine which, in accordance with at least one set value fed thereto, controls at least one power control element (3) to be connected to an electric network (4) and to the motor (1), said control mechanism comprising a computing unit (12) and a memory (14), characterized in that the memory (14) includes parameters of a plurality of different motors, and that there is provided a device recognizing the connected motor (1) and causing the respective parameters of the connected motor to be fed from the memory (14) to the computing unit (12).

2. Control mechanism for an electric drive motor (1) of a printing machine which, in accordance with at least one set value fed thereto, controls at least one power control element (3) to be connected to an electric network (4) and to the motor (1), said control mechanism comprising a computing unit (12) and a memory (14), in particular according to Claim 1, characterized in that the memory (14) includes parameters of a plurality of different power control elements, and that there is provided a device recognizing the power control element (3) connected to a control device and causing the respective parameters of the connected power control element (3) to be fed from the memory (14) to the computing unit (12).

3. Control mechanism according to Claim 1 or 2, characterized in that to the computing unit (12) there is assigned a manually operable input device (15) for inputting data regarding the motor (1) or the power control element (3).

4. Control mechanism according to Claim 1, characterized in that the recognition of the connected motor (1) is effected via coded plugs which are preferably connected with measurement and/or control lines leading to the motor (1).

5. Control mechanism according to Claim 2, characterized in that the recognition of the connected power control element (3) is effected via coded plugs.

6. Control mechanism according to Claim 1 or 2, characterized in that a measuring device for detecting at least one characteristic measurement value is provided for the recognition of the connected motor (1) and the power control element (3), respectively.

**7.** Control mechanism according to Claim 1 or 2, characterized in

that a coding system which is scannable via a line is provided for recognizing the connected motor (1) and the power control element (3), respectively.

**8.** Control mechanism according to one of the preceding claims, characterized in

that the memory (14) includes parameters of a current converter, used to supply the motor (1) with power, for the purpose of being evaluated by the computing unit (12).

**Revendications**

**1.** Dispositif de commande d'un moteur électrique (1) d'entraînement d'une machine d'impression, qui commande, en fonction d'au moins une grandeur de consigne qui lui est envoyée, au moins un étage (3) de régulation de la puissance qui doit être raccordé a un réseau électrique (4) et au moteur (1), dispositif se composant d'un ordinateur (12) et d'une mémoire (14),

caractérisé

en ce que la mémoire (14) contient des paramètres de plusieurs moteurs différents et en ce qu'un dispositif prévu pour l'identification du moteur raccordé (1) provoque l'envoi a' l'ordinateur (12) des paramètres correspondant au moteur raccordé et prélevés sur la mémoire (14).

**2.** Dispositif de commande d'un moteur électrique (1) d'entraînement d'une machine d'impression, qui commande, en fonction d'au moins une grandeur de consigne qui lui est envoyée, au moins un étage de régulation de la puissance (3) qui doit être raccordé à un réseau électrique (4) et au moteur (1), dispositif se composant d'un ordinateur (12) et d'une mémoire (14), en particulier selon la revendication 1,

caractérisé

en ce que la mémoire (14) contient des paramètres de plusieurs étages différents de régulation de la puissance et en ce qu'un dispositif prévu pour identifier l'étage (3) de régulation de la puissance raccordé au dispositif de commande provoque l'envoi à l'ordinateur (12) des paramètres correspondant à l'étage raccordé de régulation de la puissance (3) et prélevés sur la mémoire (14).

**3.** Dispositif de commande selon le revendication 1 ou 2, caractérisée en ce qu'un dispositif d'entrée (15) se manipulant à la main et destiné à l'introduction d'indications concernant le moteur (1) ou l'étage de régulation de la puissance (3) est affecté à la calculatrice (12).

**4.** Dispositif de commande selon la revendication 1, caractérisé en ce que l'identification du moteur raccordé (1) s'effectue au moyen de fiches codées qui sont de préférence reliées à des conducteurs de mesure et/ou de contrôle aboutissant eu moteur (1).

**5.** Dispositif de commande selon la revendication 2, caractérisé en ce que l'identification de l'étage de régulation de la puissance (3) qui est raccordé s'effectue au moyen de fiches codées.

**6.** Dispositif de commande selon la revendication 1 ou 2, caractérisé en ce qu'un dispositif de mesure destiné à détecter au moins une grandeur de mesure caractéristique est prévu pour l'identification du moteur (1) ou de l'étage de régulation de la puissance (3) qui est raccordé.

**7.** Dispositif de commande selon le revendication 1 ou 2, caractérisé en ce qu'un codage pouvant être interrogé par un conducteur est prévu pour l'identification du moteur (1) ou de l'étage de régulation de la puissance (3) qui est raccordé.

**8.** Dispositif de commande selon l'une des revendications précédentes, caractérisé en ce que la mémoire (14) contient des paremètres d'un convertisseur statique utilisé pour l'alimentation en énergie du moteur (1) pour le traitement par l'ordinateur (12).

Maschinensteuerung — 13

Recheneinrichtung — 12

15

Speicher — 14

Daten

Sollwerte

Istwerte

Stromrichter-Recheneinrichtung — 5

7

8

Leistungs-teil — 3

3 ~

4

2

M — 1

10

n ist

11

8

EP 0 223 100 B1